# EUROPÄISCHE PATENTSCHRIFT

(11) **EP 3 185 044 B1**
(45) Veröffentlichungstag und Bekanntmachung des Hinweises auf die Patenterteilung: **12.08.2020**
(21) Anmeldenummer: 16204963.9
(22) Anmeldetag: 19.12.2016
(51) Int. Cl.: G01T 1/02

(54) **DOSIMETERVORRICHTUNG**
DOSIMETER DEVICE
DOSIMÈTRE

(30) Priorität: 22.12.2015 CH 18992015
(43) Veröffentlichungstag der Anmeldung: 28.06.2017
(73) Patentinhaber: Dosilab AG, 3098 Köniz (CH)
(72) Erfinder: GINDRAUX, Loys, 8706 Meilen (CH); FURLAN, Miha, 3008 Bern (CH); GODART, Frédéric, 52300 Chatonrupt (FR)
(74) Vertreter: AMMANN PATENTANWÄLTE AG

(56) Entgegenhaltungen:
- DE-C- 962 005
- FR-A1- 2 614 107
- JP-A- 2000 275 346
- US-A- 5 083 031
- US-A- 5 992 996
- US-A1- 2014 217 309

## Beschreibung

Die vorliegende Erfindung bezieht sich auf eine Anordnung umfassend eine Dosimetervorrichtung mit einem Trägerteil und Befestigungsmitteln zur Befestigung des Trägerteils an einer Brille als Trageinrichtung.

Ionisierende Strahlung, wie sie in vielen Arbeitsbereichen und in zunehmendem Mass vor allem in der Medizin Verwendung findet, kann unter anderem zur Trübung der Augenlinse (Katarakt) führen. Im Rahmen der Strahlenschutzvorsorge verdient u.A. die Exposition der Augenlinse Beachtung.

Neben direkten Schutzmassnahmen (z.B. das Vorsehen einer Schutzeinrichtung wie einer Schutzbrille oder eines Schutzvisiers sowie das Einhalten einer kurzen Expositionszeit und grossen Abstandes) kann eine dosimetrische Überwachung angezeigt sein, um bei Verdacht auf eine Grenzwertüberschreitung der akkumulierten Dosis in der Nähe des Auges rechtzeitig Gegenmassnahmen treffen zu können. Dosimetervorrichtungen der eingangs erwähnten Art sind u.a. für eine derartige Überwachung einsetzbar.

Aus der EP 1 112 526 B1 ist eine Dosimetervorrichtung mit einem Messelement in Form eines Dosimeterchips bekannt, der in einen einseitig offenen Steckteil einlegbar ist. Steckteil und Messelement werden dann in eine Ausnehmung in einem Gehäuse eingefügt, welches z.B. an einer Brille befestigt ist. Diese Ausgestaltung bietet einen ungenügenden Schutz des Messelements, so dass dieses beschädigt werden kann. Eine Beschädigung ist z.B. bei der direkten Handhabung des Messelements zu Auswertungszwecken möglich und/oder wenn das Steckteil unbeabsichtigterweise aus der Ausnehmung fällt.

Eine Aufgabe der vorliegenden Erfindung ist es, eine Anordnung umfassend eine Dosimetervorrichtung mit einem besser geschützten Messelement zum Erfassen der ionisierenden Strahlung anzugeben.

Eine Anordnung, die diese Aufgabe löst, ist im Anspruch 1 angegeben. Die weiteren Ansprüche geben bevorzugte Ausführungen und ein Verfahren zum Erfassen von ionisierender Strahlung an.

Vorzugsweise weist die Dosimetervorrichtung eines oder mehrere der folgenden Merkmale auf:
- Das Trägerteil umfasst eine geschlossene Ummantelung mit einem Messelement, welche in der Draufsicht gesehen im Wesentlichen kreisförmig ausgebildet ist.
- Das Trägerteil weist herausragende Arme auf zur Bildung eines Bajonettverschlusses mit einem an der Trageinrichtung anbringbaren oder angebrachten Gegenstück.
- Am Trägerteil ist ein Randelement gebildet, welches elastisch ausgestaltet ist zur Bildung einer Schnappverbindung. Vorzugweise ist ein einzelnes umlaufendes Randelement vorgesehen oder mehrere umlaufend angeordnete Randelemente.
- Am Trägerteil ist ein Randelement gebildet, welches ein Gewinde aufweist zur Bildung einer Schraubverbindung mit einem an der Trageinrichtung anbringbaren oder angebrachten Gegenstück.
- Es ist ein ein- oder mehrteiliges Gegenstück vorgesehen, welches an der Trageinrichtung anbringbar oder angebracht ist und spreizbare Arme aufweist zur Bildung eines Einschubs, in welchen das Trägerteil so einschiebbar ist, dass die Arme das Trägerteil umgreifen.
- Es ist ein Gegenstück mit einem an der Trageinrichtung anbringbaren oder angebrachten Befestigungsteil und mit einem Adapterteil vorgesehen, wobei das Adapterteil einen Einschub aufweist, in welchen das Trägerteil einschiebbar ist, und lösbar mit dem Befestigungsteil verbindbar ist, vorzugsweise mittels einer Bajonettverbindung.
- Es ist ein an der Trageinrichtung anbringbares oder angebrachtes Gegenstück vorgesehen, welches zur Bildung einer Druckknopfverbindung mit dem Trägerteil ausgestaltet ist.
- Es ist ein an der Trageinrichtung anbringbares oder angebrachtes Gegenstück vorgesehen, mit welchem das Trägerteil lösbar verbindbar ist und welches aus metallfreiem Material, insbesondere Kunststoff, gefertigt ist.

Die Erfindung wird im Folgenden anhand von Ausführungsbeispielen unter Bezugnahme auf Figuren erläutert. Es zeigen
Fig. 1 eine Explosionsansicht eines ersten Ausführungsbeispiels einer Dosimetervorrichtung;
Fig. 2 die Dosimetervorrichtung gemäss Fig. 1 in einer geschnittenen Seitenansicht zusammen mit einem Teil einer Trageinrichtung;
Fig. 3 das Trägerteil aus Fig. 1 in einer Ansicht von unten;
Fig. 4 eine Explosionsansicht einer Variante der Dosimetervorrichtung gemäss Fig. 1;
Fig. 5 die Dosimetervorrichtung gemäss Fig. 4 in einer geschnittenen Seitenansicht zusammen mit einem Teil einer Trageinrichtung;
Fig. 6 ein zweites Ausführungsbeispiel einer Dosimetervorrichtung in einer Seitenansicht;
Fig. 7 die Dosimetervorrichtung gemäss Fig. 6 in einer Ansicht von unten;
Fig. 8 die Dosimetervorrichtung gemäss Fig. 6 in einer geschnittenen Seitenansicht zusammen mit einem Teil einer Trageinrichtung;
Fig. 9 eine Variante der Dosimetervorrichtung gemäss Fig. 6 in einer teilweise geschnittenen Seitenansicht zusammen mit einem Teil einer Trageinrichtung;
Fig. 10 ein drittes Ausführungsbeispiel einer Dosimetervorrichtung in einer geschnittenen Seitenansicht;
Fig. 11 die Dosimetervorrichtung aus Fig. 10 angebracht an einer Trageinrichtung;
Fig. 12 ein viertes Ausführungsbeispiel einer Dosimetervorrichtung in einer geschnittenen Seitenansicht zusammen mit einem Teil einer Trageinrichtung;
Fig. 13 das Gegenstück, welches zu einem fünften Ausführungsbeispiel einer Dosimetervorrichtung gehört, in einer perspektivischen Ansicht;
Fig. 14 das Gegenstück aus Fig. 13 in einer Vorderansicht;
Fig. 15 das Gegenstück aus Fig. 13 in einer Draufsicht zusammen mit einem Trägerteil;
Fig. 16 eine perspektivische Ansicht von Gegenstück und Trägerteil aus Fig. 15 im zusammengefügten Zustand;
Fig. 17 Gegenstück und Trägerteil aus Fig. 16 in einer geschnittenen Seitenansicht zusammen mit einem Teil einer Trageinrichtung;
Fig. 18 das Befestigungsteil eines Gegenstücks, welches zu einem sechsten Ausführungsbeispiel einer Dosimetervorrichtung gehört, in einer perspektivischen Ansicht;
Fig. 19 das Befestigungsteil aus Fig. 18 in einer Draufsicht;
Fig. 20 das Befestigungsteil aus Fig. 18 in einer Ansicht von unten;
Fig. 21 das Befestigungsteil aus Fig. 18 in einer Ansicht geschnitten entlang der Linie XXI-XXI gemäss Fig. 19;
Fig. 22 das Adapterteil des Gegenstücks, welches zum sechsten Ausführungsbeispiel gehört, in einer perspektivischen Ansicht;
Fig. 23 das Adapterteil aus Fig. 22 in einer anderen perspektivischen Ansicht;
Fig. 24 das Adapterteil aus Fig. 22 zusammen mit einem Trägerteil in einer Draufsicht;
Fig. 25 das Adapterteil aus Fig. 22 in einer Ansicht geschnitten entlang der Linie XXV-XXV gemäss Fig. 24;
Fig. 26 das Adapterteil aus Fig. 22 in einer Ansicht von unten;
Fig. 27 eine Seitenansicht der Teile aus Fig. 18 und 24 im zusammengesetzten Zustand zusammen mit einem Teil einer Trageinrichtung;
Fig. 28 die Dosimetervorrichtung gemäss Fig. 27 in einer perspektivischen Ansicht, jedoch ohne Trageinrichtung;
Fig. 29 ein Trägerteil, welches zu einem siebenten Ausführungsbeispiel einer Dosimetervorrichtung gehört, in einer Draufsicht;
Fig. 30 das Trägerteil aus Fig. 29 in einer Seitenansicht;
Fig. 31 das Befestigungsteil aus Fig. 18 zusammen mit einem daran befestigten Trägerteil gemäss Fig. 29 in einer Draufsicht;
Fig. 32 die Dosimetervorrichtung gemäss Fig. 31 in einer Ansicht geschnitten entlang der Linie XXXII-XXXII zusammen mit einem Teil einer Trageinrichtung;
Fig. 33 die Dosimetervorrichtung gemäss Fig. 32 in einer perspektivischen Ansicht, jedoch ohne Trageinrichtung;
Fig. 34 ein Stirnband mit einer Dosimetervorrichtung;
Fig. 35 eine Haube mit einer Dosimetervorrichtung;
Fig. 36 eine Maske mit einer Dosimetervorrichtung;
Fig. 37 eine Brille mit einer Dosimetervorrichtung;
Fig. 38 ein Visier mit einer Dosimetervorrichtung; und
Fig. 39 ein Fingerring mit einer Dosimetervorrichtung.

### 1. Ausführungsbeispiel

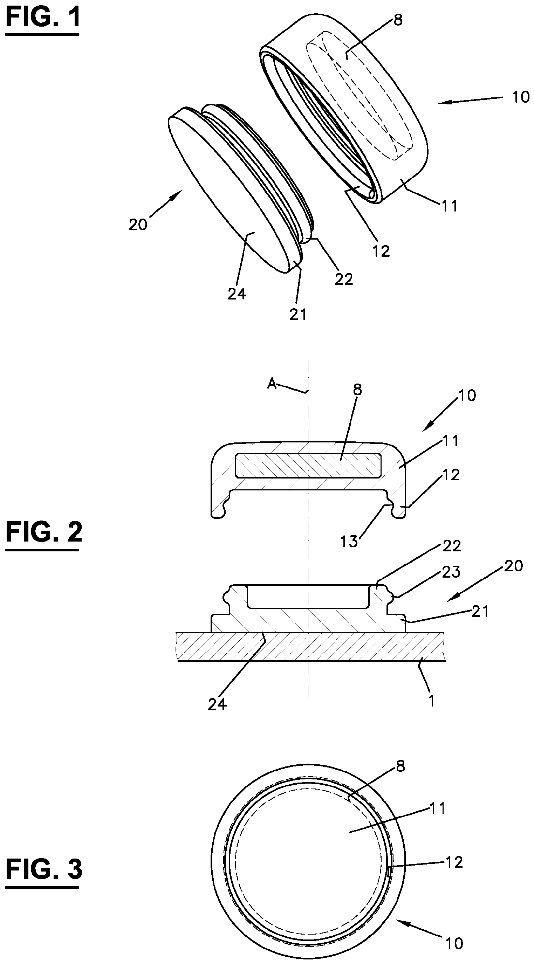

Figuren 1-3 zeigen ein erstes Ausführungsbeispiel einer Dosimetervorrichtung. Diese weist ein Messelement 8 zum Erfassen der Strahlendosis (z.B. Photonen- oder Betastrahlung) auf, welches in einem Trägerteil 10 aufgenommen ist. Das Trägerteil 10 umfasst eine geschlossene Ummantelung aus fest miteinander verbundenen Wandungen, die das Messelement 8 umschliessen. Die Wandungen sind z.B. einstückig gefertigt und/oder stoffschlüssig miteinander verbunden, z.B. durch Kleben, Schweissen, etc. Vorzugsweise ist die Ummantelung so, dass sie frei von Spalten ist, die bis zum Messelement 8 reichen. Bei Bedarf kann die Ummantelung wasserdicht ausgestaltet sein.

Das Messelement 8 ist scheibenförmig ausgebildet und weist z.B. einen maximalen Durchmesser von kleiner als 20 mm, bevorzugt kleiner als 15 mm auf, z.B. 10 mm und eine Dicke von weniger als 10 mm, bevorzugt kleiner als 5 mm auf.

Das Messelement 8 ist beispielsweise in Form eines passiven Dosimeters ausgebildet, insbesondere eines Thermolumineszenzdosimeters (TLD) oder eines Dosimeters basierend auf optisch stimulierter Lumineszenz (OSL). Passive Dosimeter sind frei von einer Energiequelle, z.B. einer Batterie, und erlauben in der Regel kein direktes Auslesen der erfassten Strahlendosis. Passive Dosimeter eignen sich gut für die Überwachung von routinemässigen Arbeiten (interventionelle Medizin, Nuklearmedizin), da sie aufgrund ihrer kleinen Dimensionen für die Messung des lokalen Strahlenfelds an praktisch jeder kritischen Stelle getragen werden können.

Bei einem TLD sind bestimmte Kristalle vorgesehen, in welchen die ionisierende Strahlung mikroskopische Veränderungen erzeugt. Bei der Auswertung werden die Kristalle erhitzt, wobei in Abhängigkeit der aufgenommenen Strahlungsenergie Licht abgegeben wird. Aus der Lichtausbeute ergibt sich die Dosis, die sich über die gemessene Zeit kumuliert hat. Bei einem OSL findet das Auslesen durch optische Anregung statt.

Die Ummantelung des Trägerteils 10 umgibt vollständig das Messelement 8 und bildet ein Kappenelement 11, von welchem ein Randelement 12 absteht. Dieses verläuft um eine Mittelachse A, entlang welcher das Trägerteil 10 mit dem Messelement 8 verschoben wird, um es an einem Gegenstück 20 anbringen bzw. von diesem entfernen zu können. Zur Herstellung des Trägerteils 10 werden die Elemente 11 und 12 separat gefertigt und nach Einfügen des Messelements 8 fest miteinander verbunden, z.B. durch Verschweissen mit Ultraschall oder Laser. Die Ummantelung des Trägerteils 10 kann auch in einteiliger Form gefertigt werden, indem das Messelement 8 durch eine aushärtbare Masse umgeben wird.

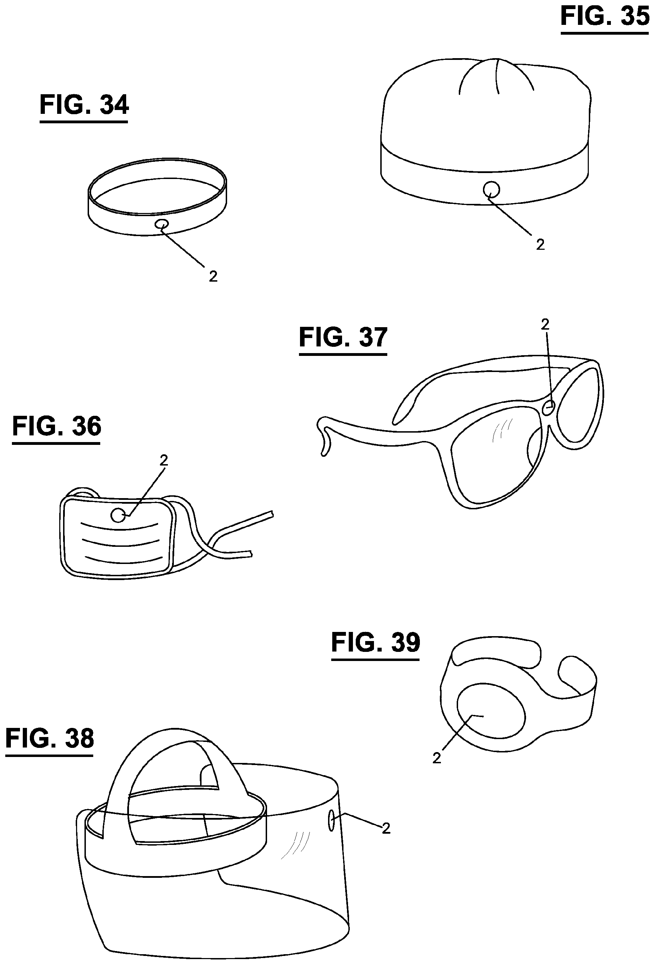

Das Gegenstück 20 zur Befestigung des Trägerteils 10 umfasst ein Sockelelement 21, von welchem ein um die Mittelachse A verlaufendes Randelement 22 absteht und welches an einer am Kopf eines Benutzers befestigbaren Trageinrichtung anbringbar ist. Fig. 2 zeigt lediglich einen Teil 1 dieser Trageinrichtung. Diese ist als Brille, insbesondere Bleiglas-Schutzbrille, ausgebildet (vgl. Fig. 37). Im Folgenden wird der Teil 1 der Trageinrichtung auch "Tragteil" genannt. Die Position des Gegenstücks 20 ist bei einer Schutzbrille auf der Innenseite, in der Nähe des Auges, an der Seitenblende.

Die beiden Randelemente 12 und 22 sind so ausgebildet, dass das Trägerteil 10 lösbar am Gegenstück 20 befestigbar ist. Hier sind die Randteile 12 und 22 zur Bildung einer Schnappverbindung ausgebildet. Es ist somit eine Verbindung zwischen Trägerteil 10 und Gegenstück 20 bereitstellbar wie bei einem Druckknopf. Das Randelement 12 des Trägerteils 10 weist eine Innenfläche auf, die mit einer um die Mittelachse A verlaufende Nut 13 versehen ist, und das Randelement 22 des Gegenstücks 20 umfasst eine Aussenfläche, welche eine um die Mittelachse A verlaufende Wulst 23 aufweist. Die Randteile 12, 23 sind in radialer Richtung in elastischer Weise bewegbar ausgebildet.

Beim Anbringen des Trägerteils 10 am Gegenstück 20 kommt das Randelement 12 des Trägerteils 10 mit der Wulst 23 des Gegenstücks 20 in Kontakt. Dadurch weitet sich das Randelement 12 auf bzw. das Randelement 22 wird nach innen gedrückt, so dass das Randelement 12 über die Wulst 23 hinweggeschoben werden kann. Greift das Randelement 12 hinter die Wulst 23, schnappt das Randelement 12 bzw. 22 wieder zurück in die Ausgangstellung. Die Wulst 23 liegt nun in der Nut 13.

Bei der Variante gemäss Figuren 1 und 2 ist das Gegenstück 20 über seine Unterseite 24 am Tragteil 1 befestigbar, z.B. durch Kleben. Die Unterseite 24 ist dazu eben und geschlossen ausgebildet.

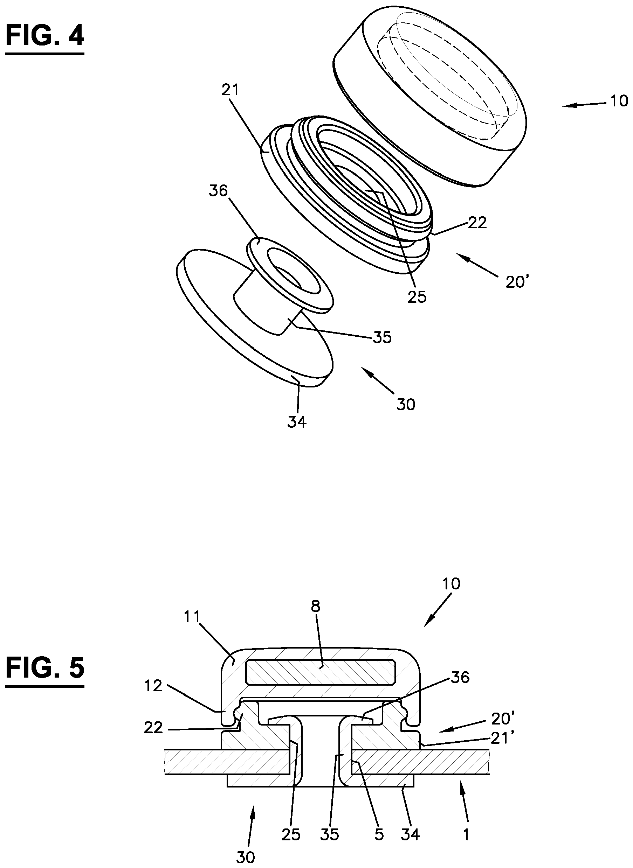

Das Gegenstück kann auch auf andere Weise befestigbar ausgestaltet sein. Figuren 4 und 5 zeigen eine Variante, bei welcher das Sockelelement 21' des Gegenstücks 20' eine Durchgangsöffnung 25 aufweist. Der Tragteil 1, der den Bereich der Trageinrichtung umfasst, der zur Befestigung des Gegenstücks 20' vorgesehen ist, weist ebenfalls eine Durchgangsöffnung 5 auf. Zur Befestigung ist ein Verbindungsteil 30 vorgesehen, welches ähnlich einer Niete ausgelegt ist. Das Verbindungsteil 30 umfasst ein rohrförmiges Stegelement 35, das im montierten Zustand durch beide Durchgangsöffnungen 5 und 25 hindurchgeht und das jeweils endseitig ein Endelement 34 bzw. 36 aufweist. Wie Fig. 5 zeigt, liegt das rückseitige Endelement 34 an der Rückseite des Tragteils 1 an. Das vorderseitige Endelement 36 liegt an der Innenseite des Sockelelements 20' an. Der Tragteil 1 ist zwischen den Elementen 21' und 34 angeordnet.

Das Trägerteil 10 und dessen Befestigung über die Randelemente 12 und 22 am Sockelteil 21' ist gleich ausgestaltet wie bei der Variante gemäss Figuren 1-3.

In Fig. 5 ist das vorderseitige Endelement 36 bereits im verformten Zustand dargestellt. Vor dem Anbringen weist das Endelement 36 einen Durchmesser auf, der kleiner als der Durchmesser der Durchgangsöffnungen 5 und 25 ist, und somit durch diese hindurchgeschoben werden kann. Das Endelement 36 wird dann in geeigneter Weise verformt z.B. durch mechanische und/oder thermische Einwirkung, so dass sich das Endelement 36 im Durchmesser vergrössert und die Durchgangsöffnung 25 im Sockelelement 21' abdeckt.

### 2. Ausführungsbeispiel

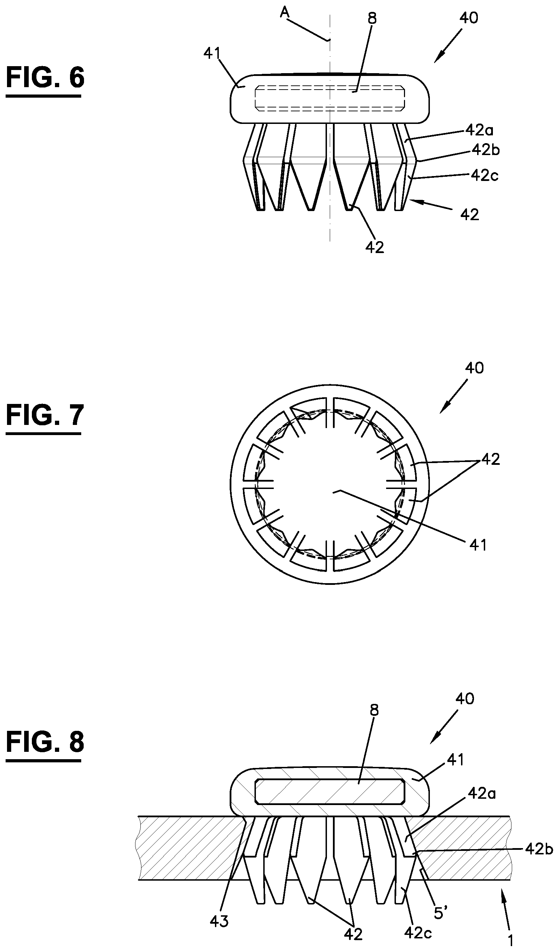

Figuren 6-8 zeigen ein zweites Ausführungsbeispiel einer Dosimetervorrichtung, die so wie beim ersten Ausführungsbeispiel für eine Schnappverbindung ausgelegt ist.

Das Trägerteil 40 weist ähnlich wie das erste Ausführungsbeispiel ein Kappenelement 41 auf, welches eine Ummantelung für das Messelement 8 bildet. Weiter weist das Trägerteil 40 einen Randbereich auf, der hier lamellenartig ausgebildet, so dass sich mehrere Zungen 42 ergeben, die vom Kappenelement 41 abstehen und um die Mittelachse A herum angeordnet sind.

Die einzelnen Zungen 42 sind in radialer Richtung federnd ausgebildet. Eine Zunge 42 weist einen ersten Abschnitt 42a auf, welcher am Kappenelement 41 befestigt ist und von der Mittelachse A weg verläuft. Dem ersten Abschnitt 42a ist ein zweiter Abschnitt 42c angefügt, der zur Mittelachse A hin verläuft. Die Zunge 42 umfasst somit einen Übergang 42b, welcher radial gesehen am weitesten entfernt von der Mittelachse A angeordnet ist und welcher hier als Knick ausgebildet ist. Der zweite Abschnitt 42c bildet das Ende der Zunge 42, welches hier eine sich verjüngende Form aufweist.

Als Gegenstück zur Befestigung des Trägerteils 40 dient ein Loch 5', welches im Tragteil 1 ausgebildet ist.

Das Trägerteil 40 mit dem Messelement 8 ist durch eine Schnappverbindung am Tragteil 1 befestigbar. Wird das Trägerteil 41 in das Loch 5' eingefügt, kommt der Übergang 42b der jeweiligen Zunge 42 in Kontakt mit dem Rand des Loches 5', so dass die Zungen 42 nach innen bewegt werden. Durch weiteres Hineinschieben federn die Zungen 42 wieder nach aussen.

Dieses Zurückfedern wird z.B. dadurch ermöglicht, indem das Loch 5' eine Form aufweist, die von einer kreiszylindrischen Form abweicht. Im Beispiel gemäss Fig. 8 weitet sich das Loch 5' in der Richtung auf, in welche die Zungen 42 eingefügt werden. Im eingefügten Zustand liegt der jeweilige erste Abschnitt 42a einer Zunge 42 am Rand an, welcher das Loch 5' definiert. Die Zungen 42 ragen hier wenig oder gar nicht aus der Rückseite des Tragteils 1 heraus und tragen daher kaum bzw. nicht auf.

Es ist auch denkbar, die Länge des ersten Abschnitts 42a einer Zunge 42 derart zu wählen, dass er durch den Tragteil 1 hindurchragen kann. Nach dem Einfügen gelangt somit der Übergang 42b zur Rückseite des Trägerteils 1, so dass die Zungen 42 wieder in die Ausgangsstellung zurückfedern können. Das Ende 42c ragt dann vollständig aus der Rückseite des Tragteils 1 heraus. Bei dieser Variante kann das Loch 5' kreiszylindrisch geformt sein.

Die Zungen 42 sind in radialer Richtung gesehen versetzt zum Rand des Kappenelements 41 angeordnet. Im montierten Zustand gemäss Fig. 8 liegt ein Teil der Unterseite 43 des Kappenelements 41 an der Vorderseite des Tragteils 1 an.

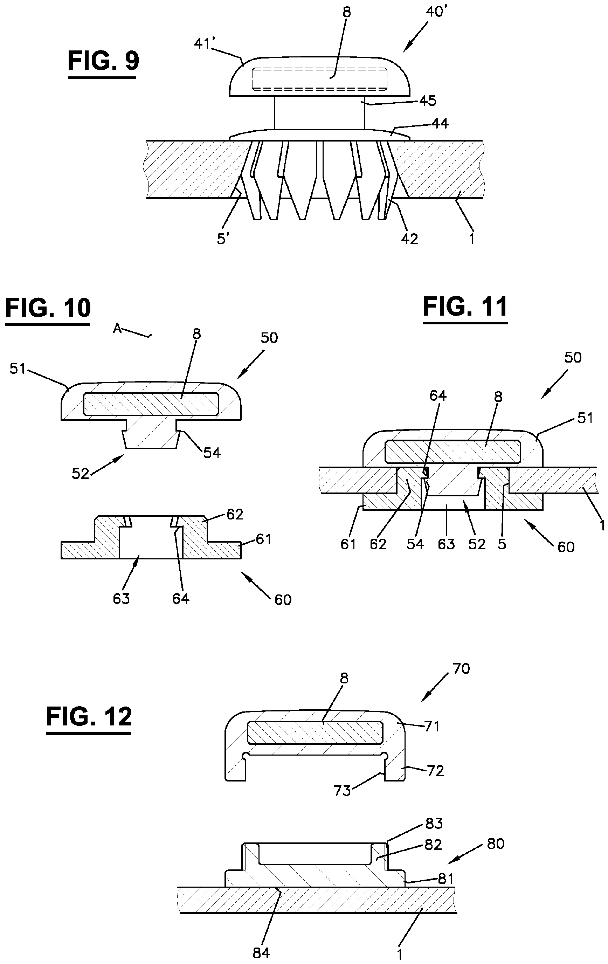

Das vorderseitige Ende des Trägerteils kann auch anders ausgestaltet sein. So können z.B., wie in Fig. 9 gezeigt, beim Trägerteil 40' ein Anschlagselement 44 und ein Zwischenelement 45 vorgesehen sein, welche zwischen dem Kappenelement 41' und den Zungen 42 angeordnet sind. In radialer Richtung gesehen ist das Zwischenelement 45 schmaler ausgestaltet als das Kappenelement 41'. Dieses reicht somit seitlich über das Zwischenelement 45 hinaus. Nach der Montage liegt das Anschlagselement 44 an der Vorderseite des Tragteils 1 an und überdeckt das Loch 5'.

Das Kappenelement 41', welches das Messelement 8 umschliesst, ist über das Zwischenelement 45 axial versetzt zum Anschlagselement 44 angeordnet. Dadurch ist mehr Platz zur Handhabung geschaffen. Die abgesetzte Anordnung des Kappenelements 41' erleichtert es insbesondere, mit den Fingern unter dieses zu greifen und durch Ziehen vom Tragteil 1 zu entfernen.

Als weitere Variante kann ein Ring als Gegenstück vorgesehen sein, der am Tragteil 1 befestigbar ist, z.B. durch Kleben, und der ein Loch definiert zum Einfügen der Zungen 42 des Trägerteils 40, 40'. Bei dieser Variante kann demnach das Loch 5' zur Befestigung am Tragteil 1 entfallen.

### 3. Ausführungsbeispiel

Figuren 10 und 11 zeigen ein drittes Ausführungsbeispiel einer Dosimetervorrichtung, welches ebenfalls für eine Schnappverbindung ausgelegt ist.

Das Trägerteil 50 weist ähnlich wie die beiden ersten Ausführungsbeispiele ein Kappenelement 51 auf, welches als geschlossene Ummantelung für das Messelement 8 dient. Vom Kappenelement 51 steht ein Zapfen 52 ab, der zum Eingriff mit einem Gegenstück 60 ausgelegt ist zur Bildung einer Druckknopfverbindung. Das Gegenstück 60 umfasst ein Sockelelement 61, von welchem ein um die Mittelachse A verlaufendes Randelement 62 absteht. Das Gegenstück 60 weist ein Loch 63 auf, in welches der Zapfen 52 einfügbar ist.

Der Zapfen 52 weist eine Aussenfläche mit einer Verdickung 54 auf, welche hier eine Stufe bildet. Die Innenfläche des Loches 63 weist einen entsprechenden Hinterschnitt 64 auf, hinter welchen die Verdickung 54 greifen kann. Zu diesem Zweck sind Form und Elastizität des Zapfens 52 so ausgelegt, dass der verdickte Bereich durch die Verengung, welcher der Hinterschnitt 64 definiert, hindurchdrückbar ist.

Im zusammengefügten Zustand gemäss Fig. 11 ragt das Randelement 62 in die Durchgangsöffnung 5 des Tragteils 1. Der Zapfen 52 ist in die Öffnung 63 eingefügt, so dass dieser in Eingriff mit dem Hinterschnitt 64 ist. Der Tragteil 1 ist zwischen den beiden Teilen 50 und 60 angeordnet. Das Gegenstück 60 braucht bei diesem Ausführungsbeispiel nicht unbedingt zusätzlich am Tragteil 1 befestigt zu werden, sondern ist aufgrund der Verbindung des Zapfens 52 mit der Innenfläche des Loches 63 gehalten.

Zum Trennen der beiden Teile 50 und 60 wird eine genügend grosse Abzugskraft auf das Trägerteil 50 ausgeübt, so dass die Verdickung 54 durch die Verengung, welche der Hinterschnitt 64 bildet, hindurchrutscht und schliesslich der Zapfen 52 vollständig aus dem Loch 63 entnommen werden kann.

### 4. Ausführungsbeispiel

Fig. 12 zeigt ein weiteres Ausführungsbeispiel, welches ähnlich aufgebaut ist wie das erste Ausführungsbeispiel und folgende Komponenten aufweist:
- ein Trägerteil 70 mit einem Kappenelement 71, welches eine Ummantelung zum Einschluss des Messelements 8 aufweist, sowie mit einem davon abstehenden Randelement 72,
- ein Gegenstück 80 mit einem Sockelteil 81 und ein davon abstehendes Randelement 82.

Im Unterschied zum ersten Ausführungsbeispiel sind die Randelemente 72 und 82 nicht für eine Schnappverbindung, sondern für eine Schraubverbindung ausgelegt. Zu diesem Zweck weist das Randelement 72 ein Innengewinde 73 auf, welches in ein am Randelement 82 gebildetes Aussengewinde 83 greifen kann. Zur Montage ist das Trägerteil 70 mit dem Gegenstück 80 verschraubbar.

Beim Beispiel gemäss Fig. 12 ist das Gegenstück 80 über seine Unterseite 84 am Tragteil 1 befestigbar. Ähnlich wie die Variante gemäss Fig. 5 kann das Gegenstück 80 mit einer Durchgangsöffnung versehen sein, um es mittels eines Verbindungselements, z.B. einem solchen gemäss Fig. 4, am Tragteil 1 befestigen zu können.

### 5. Ausführungsbeispiel

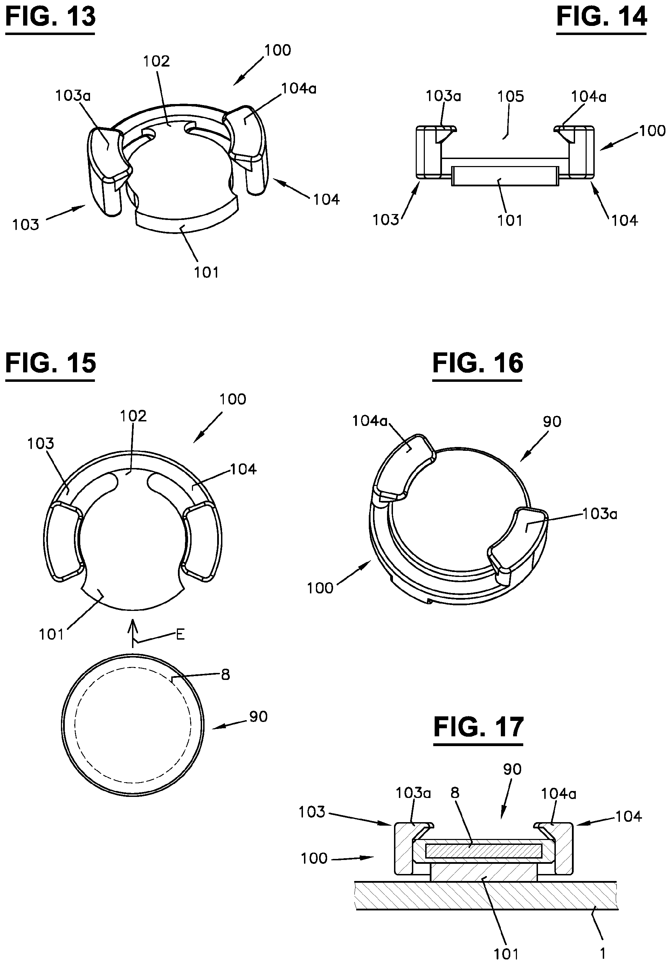

Figuren 13-17 zeigen ein weiteres Ausführungsbeispiel, welches wieder zur Bildung einer Schnappverbindung ausgelegt ist. Das Trägerteil 90 ist als im Wesentlichen kreisförmiges Scheibenteil ausgebildet, welches eine geschlossene Ummantelung zur Aufnahme des Messelements 8 bildet.

Das Gegenstück 100 weist ein Basiselement 101 auf, das scheibenförmig ausgebildet ist und seitlich einen Verbindungsbereich 102 aufweist. An diesem sind zwei, lateral federnde Arme 103, 104 befestigt. Die Arme 103, 104 sind jeweils mit einem Anschlagselement 103a, 104a versehen und enden mit einem Abstand voneinander, der kleiner ist als der maximale Durchmesser des Trägerteils 90. Die Arme 103, 104 mit den Anschlagselementen 103a, 104a definieren einen Einschub 105, in welchen das Trägerteil 90 aufnehmbar ist. Das Trägerteil 90 ist dazu seitlich durch Verschieben in der Verschieberichtung E in den Einschub 105 einfügbar.

Das Gegenstück 100 wird am Tragteil 1 befestigt, indem es z.B. über die Unterseite des Basiselements 101 festgeklebt wird. Das Trägerteil 90 ist anbringbar, indem es seitlich in die Öffnung, welche die Enden der Arme 103, 104 definieren, eingeschoben wird, so dass diese gespreizt werden. In Fig. 15 ist die Richtung, in welche das Trägerteil 90 zum Einschieben verschoben wird, mit dem Pfeil E gekennzeichnet.

Ist das Trägerteil 90 vollständig eingeschoben, federn die Arme 103, 104 zurück in ihre Anfangsstellung. Die Anschlagselemente 103a, 104a erstrecken sich radial gesehen nach innen, so dass sie am Trägerteil 90 zumindest teilweise anliegen und dieses in axialer Richtung sichern. (Die hier verwendeten Bezeichnungen "radial" und "axial" beziehen sich auf die Achse, welche quer zur Richtung E verläuft und um welche die Arme 103, 104 sich erstrecken.) Das Trägerteil 90 ist so festgehalten, dass seine Vorderseite freiliegt und somit der Zugang des Messelements 8 zum Empfangen der zu erfassenden Strahlen gewährleistet ist.

Zum Lösen wird eine genügend grosse Zugkraft auf das Trägerteil 90 ausgeübt, so dass die Arme 103, 104 gespreizt werden und die Enden so weit voneinander beabstandet sind, dass das Trägerteil 90 hindurchgeschoben werden kann.

### 6. Ausführungsbeispiel

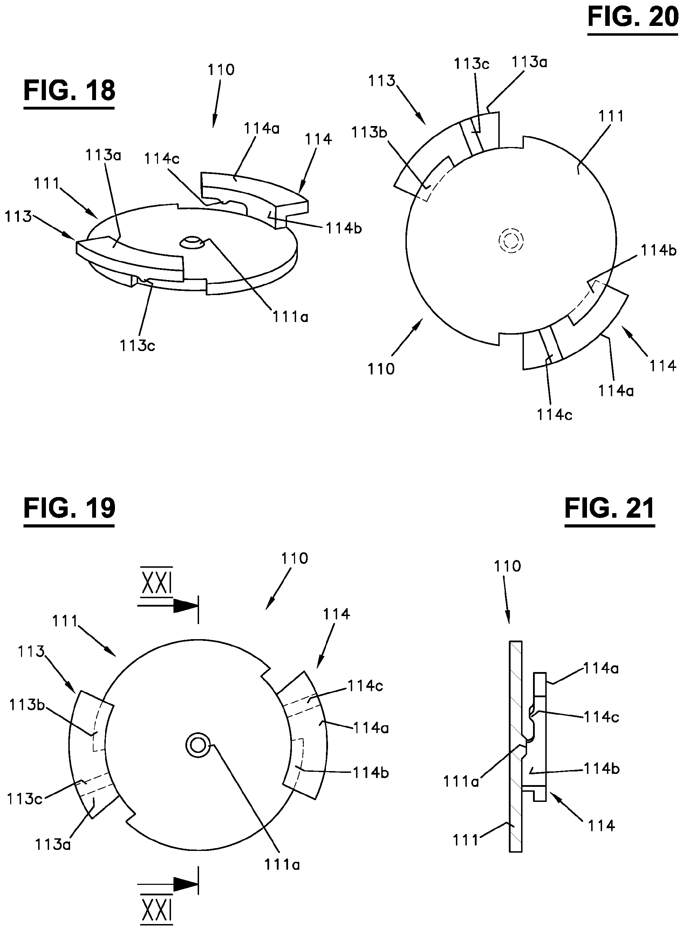

Figuren 18-28 zeigen ein weiteres Ausführungsbeispiel einer Dosimetervorrichtung, welche zur Bildung einer Kombination aus einer Schnapp- und Bajonettverbindung ausgelegt ist. Das Trägerteil 90 ist so aufgebaut wie beim fünften Ausführungsbeispiel und ist somit als im Wesentlichen kreisförmiges Scheibenteil ausgebildet, welches eine geschlossene Ummantelung für das Messelement 8 bildet.

Das Gegenstück ist zweiteilig ausgebildet und umfasst ein Befestigungsteil 110 und ein Adapterteil 120.

Das Befestigungsteil 110 ist in den Figuren 18-21 dargestellt. Es weist ein Basiselement 111 auf, welches scheibenförmig ausgebildet ist und an welchem Verbindungselemente 113, 114 angeordnet sind. Das Basiselement 111 weist einen Rastvorsprung 111a auf, der z.B. in der Mitte angeordnet ist.

Das jeweilige Verbindungselement 113, 114 weist ein Flügelstück 113a, 114a auf, das axial versetzt zum Basiselement 111 angeordnet und mit diesem über eine Wandung 113b, 114b federnd verbunden ist. An der Unterseite des jeweiligen Flügelstücks 113a, 114a befindet sich ein Rastvorsprung 113c, 114c, der mit einem Abstand zur Wandung 113b, 114b angeordnet ist. Dieser Abstand entspricht der Dicke eines Rastarmes 126, 127 des Adapterteils 120.

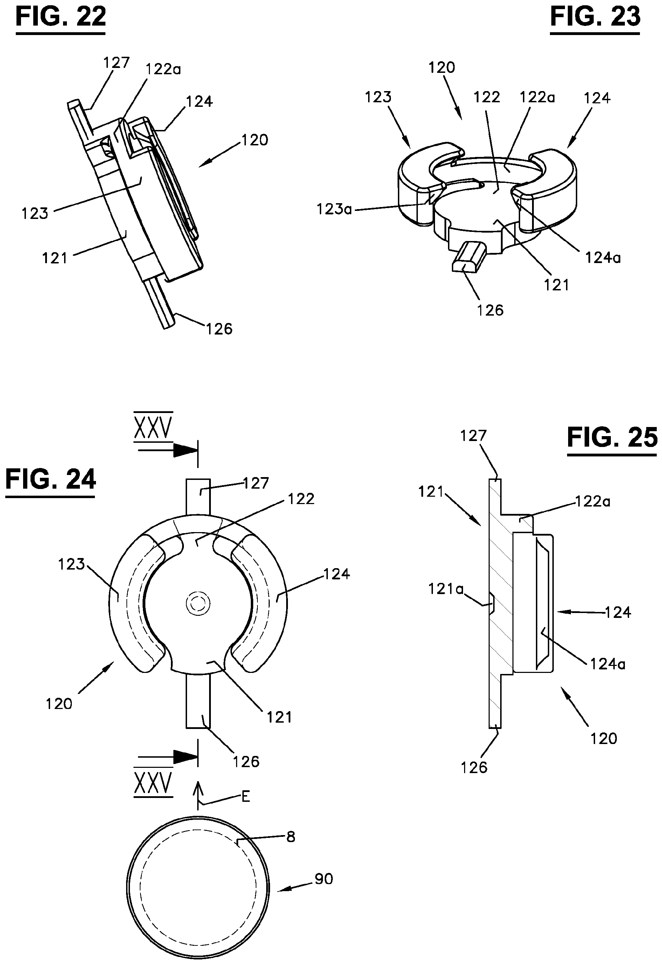

Das Adapterteil 120 ist in den Figuren 22-26 dargestellt. Zur Bildung einer Schnappverbindung mit dem Trägerteil 90 umfasst das Adapterteil 120 ähnliche Komponenten wie das Gegenstück 100 des fünften Ausführungsbeispiels, nämlich:
- ein Basiselement 121, das hier scheibenförmig ausgebildet ist, und
- zwei, lateral federnde Arme 123, 124, die über einen seitlichen Verbindungsbereich 122 am Basiselement 121 befestigt und die jeweils mit einem Anschlagselement 123a, 124a versehen sind.

Die Arme 123, 124 zusammen mit den Anschlagselementen 123a, 124a definieren einen Einschub, in welchen das Trägerteil 90 durch Verschieben in der Verschieberichtung E einfügbar ist. Der Verbindungsbereich 122 weist eine sich axial und umfänglich erstreckende Wandung 122a auf, welche einen Anschlag in der Verschieberichtung E definiert.

Zusätzlich zum Gegenstück 100 gemäss dem fünften Ausführungsbeispiel umfasst das Adapterteil 120 Rastarme 126, 127 auf, die diametral zueinander am Basiselement 121 befestigt sind und radial nach aussen ragen, und eine Rastdelle 121a, in welche der Rastvorsprung 111a des Befestigungsteils 110 eingreifen kann.

Das Befestigungsteil 110 wird am Tragteil 1 befestigt, indem es z.B. über die Unterseite des Basiselements 111 festgeklebt wird. Es ist auch denkbar, das Befestigungsteil 110 als integralen Bestandteil des Tragteils 1 zu fertigen, indem es z. B. einstückig mit einer Wandung des Trageteils 1 ausgebildet wird.

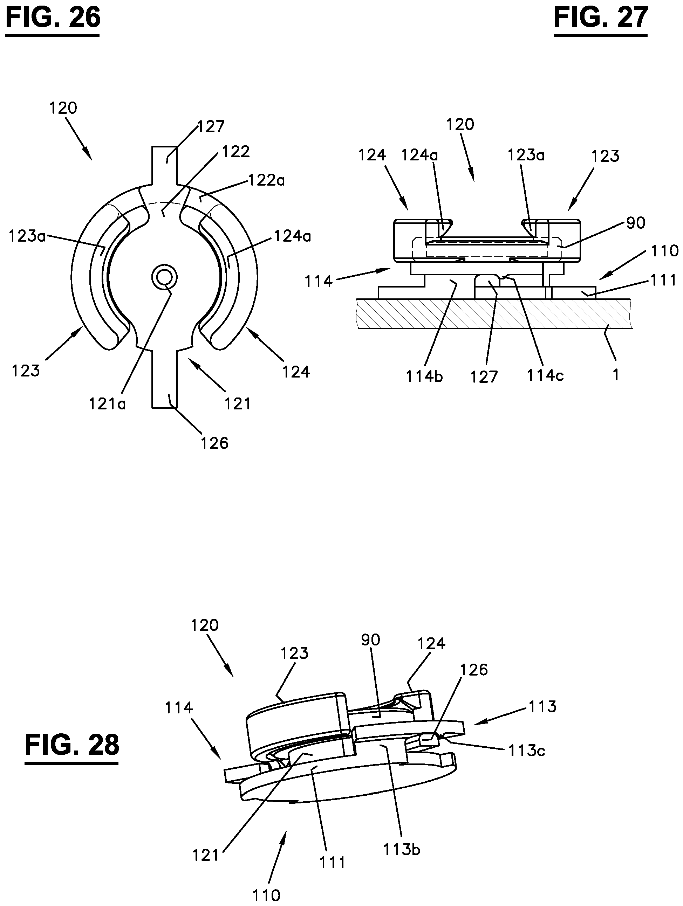

Am Befestigungsteil 110 ist mittels des Adapterteils 120 das Trägerteil 90 anbringbar. Dazu wird dieses seitlich in die Öffnung, welche die Enden der Arme 123, 124 des Adapterteils 120 definieren, eingeschoben und das Adapterteil 120 zusammen mit dem Trägerteil 90 auf dem Befestigungsteil 110 so positioniert, dass die Basiselemente 111 und 121 aufeinander zu liegen kommen, der Rastvorsprung 111a in die Rastdelle 121a greift und die Rastarme 126, 127 unter die Flügelstücke 113a, 114a gedreht werden können. In der Endstellung, wie in den Figuren 27 und 28 gezeigt, befindet sich ein Rastarm 126, 127 zwischen Rastvorsprung 113c, 114c und Wandung 113b, 114b.

Durch Drehen in der entgegengesetzten Richtung sind die Rastarme 126, 127 wieder über die Rastvorsprünge 113c, 114c hinweg bewegbar, so dass das Adapterteil 120 zusammen mit dem Trägerteil 90 vom Befestigungsteil 110 getrennt werden kann.

Durch Ausüben einer Zugkraft auf das Trägerteil 90 werden die Arme 123, 124 des Adapterteils 120 gespreizt, so dass das Trägerteil 90 aus dem Adapterteil 120 entnommen werden kann.

### 7. Ausführungsbeispiel

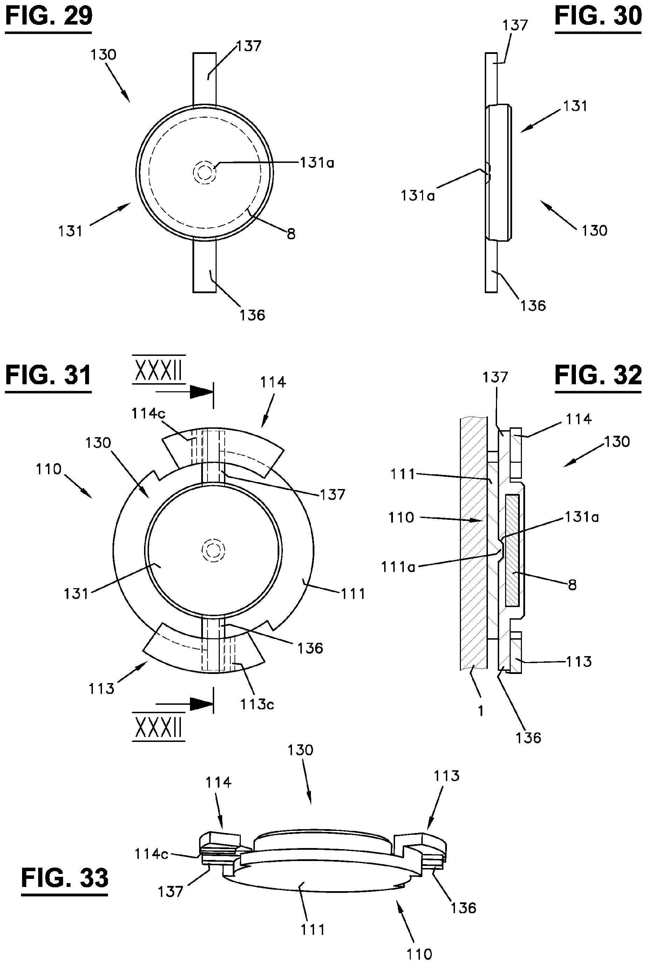

Figuren 29-33 zeigen ein weiteres Ausführungsbeispiel einer Dosimetervorrichtung, welche zur Bildung einer Bajonettverbindung ausgelegt ist. Dieses Beispiel ist eine Abwandlung des sechsten Ausführungsbeispiels, indem das Adapterteil 120 weggelassen wird. Dazu sind direkt am Trägerteil 130 Rastarme 136, 137 ausgebildet, die diametral angeordnet sind und radial nach aussen ragen (vgl. Figuren 29 und 30) .

Das Trägerteil 130 weist einen Grundkörper 131 auf, der hier als kreisförmiges Scheibenteil ausgebildet ist und der eine geschlossene Ummantelung für Messelement 8 bildet. Vorzugsweise ist der Grundkörper 131 mit einer Rastdelle 131a versehen zum Eingriff mit dem Rastvorsprung 111a des Befestigungsteils 110. Dieses ist gleich aufgebaut wie beim sechsten Ausführungsbeispiel.

Das Trägerteil 130 wird am Befestigungsteil 110 so positioniert, dass der Grundkörper 131 auf dem Basiselement 111 zu liegen kommet, der Rastvorsprung lila in die Rastdelle 131a greift und die Rastarme 136, 137 unter die Flügelstücke 113a, 114a gedreht werden können. In der Endstellung, wie in den Figuren 31 bis 33 gezeigt, befindet sich ein Rastarm 136, 137 zwischen Rastvorsprung 113c, 114c und Wandung 113b, 114b.

Durch Drehen in der entgegengesetzten Richtung sind die Rastarme 136, 137 wieder über die Rastvorsprünge 113c, 114c hinweg bewegbar, so dass das Trägerteil 130 vom Befestigungsteil 110 getrennt werden kann.

Die Teile 10, 20, 20', 30, 40, 40', 50, 60, 70, 80, 90, 100, 110, 120, 130 sind vorzugsweise aus metallfreiem Material, z.B. Kunststoff gefertigt. Dadurch kann eine unerwünschte Streuung der zu messenden Strahlung verhindert werden. Vorzugsweise ist das Trägerteil 10, 40, 40', 50, 70, 90, 130 und/oder das Gegenstück 20, 20', 30, 60, 80, 100, 110, 120 aus einem Material gefertigt, das für einen medizinischen Einsatz geeignet ist und das z.B. möglichst chemikalienbeständig ist. Das Material ist so gewählt, dass keine Reaktionen bei Körperkontakt entstehen und/oder dass das Trägerteil 10, 40, 40', 50, 70, 90, 130 mit einer glatten Oberfläche fertigbar ist, um u.A. die Ansammlung von Bakterien zu verhindern. Als Material wird beispielsweise Kunststoff wie Polyamid verwendet.

Das Trägerteil 10, 40, 40', 50, 70, 90, 130 weist eine Ummantelung auf, welche das Messelement 8 umschliesst und welches aus fest miteinander verbundenen Wandungen gebildet ist. Dadurch wird eine unbeabsichtigte Beschädigung des Messelements 8 verhindert.

Vorzugsweise ist die Ummantelung in der Draufsicht im Wesentlichen kreisförmig ausgebildet, wobei der maximale Durchmesser der Ummantelung kleiner als 25 mm und besonders bevorzugt kleiner als 20 mm ist.

Weiter ist das Material des Trägerteils 10, 40, 40', 50, 70, 90, 130 so gewählt, dass es für die zu erfassende Strahlung transparent und/oder körpergewebeähnlich ist.

Zur Bildung des Trägerteils 10, 40, 40', 50, 70, 90, 130 werden z.B. mehrere, separate Elemente, z.B. in Form der Elemente 11 und 12 beim Trägerteil 10, bereitgestellt und nach Einfügen des Messelements 8 fest miteinander verbunden, z.B. durch Verschweissen mit Ultraschall oder Laser. Es ist auch denkbar, das Trägerteil 10, 40, 40', 50, 70, 90, 130 einteilig z.B. aus einem Kunststoff zu fertigen.

Vorzugsweise kann für einen medizinischen Einsatz das Trägerteil 10, 40, 40', 50, 70, 90, 130 gereinigt und/oder desinfiziert werden, ohne dass dabei das eingeschlossene Messelement 8 mit dem verwendeten Reinigungs- oder Desinfektionsmittel in Kontakt kommt.

Die Komponenten 5, 5', 12, 20, 20', 30, 42, 52, 60, 72, 80, 100, 110, 120, 136, 137 bilden Befestigungsmittel zur lösbaren Befestigung des Trägerteils 10, 40, 40', 50, 70, 90, 130 an einer Trageinrichtung 1. Die Befestigung ist dabei derart ausgestaltet, dass das Trägerteil an einem definierten Ort an der Trageinrichtung zu liegen kommt. Ein Teil der Befestigungsmittel kann integraler Bestandteil der Trageinrichtung 1 sein. Beispielsweise ist es denkbar, das Gegenstück 20, 80, 100 und/oder 110 bereits bei der Fertigung der Trageinrichtung 1 vorzusehen, indem es einstückig mit einer Wandung der Trageinrichtung 1 ausgebildet wird. Alternativ kann ein separates Gegenstück vorgesehen sein, das an dem gewünschten Ort an der vorgefertigten Trageinrichtung 1 befestigt wird. Das Gegenstück definiert den Ort, an welchem das Trägerteil lösbar angebracht wird. Allgemein ist über die Befestigungsmittel ein Ort an der Trageinrichtung 1 festgelegt, an welchem das Trägerteil lösbar angebracht werden kann.

Bei der Verwendung des Trägerteils ist daher dessen Messposition bekannt. Dies erlaubt es, bei Feststellung einer erhöhten Dosis das Strahlenereignis genauer zu Rekonstruieren und das Strahlenrisiko besser abzuschätzen. Auch können Messungen, die z.B. für nacheinander folgende Überwachungsperioden durchgeführt wurden, besser miteinander verglichen werden.

Wird als Messelement 8 ein passives Dosimeter eingesetzt, so wird das Trägerteil 10, 40, 40', 50, 70, 90, 130 nach der Überwachungsperiode entfernt und für die Dosisbestimmung zur Auswertestelle geschickt. Für die Auswertung ist es demnach nicht erforderlich, dass die ganze Trageinrichtung 1 der Auswertestelle zugeführt wird. Zur Auswertung wird das Trägerteil 10, 40, 40', 50, 70, 90, 130 geöffnet, z.B. durch Aufschneiden. Dabei wird dieses in der Regel zerstört. Das Messelement 8 wird entfernt und ausgewertet. Dieses kann später weiterverwendet werden, indem es durch ein neues Trägerteil 10, 40, 40', 50, 70, 90, 130 umhüllt wird. Durch Einsetzen des neuen Trägerteils 10, 40, 40', 50, 70, 90, 130 ist die Trageinrichtung 1 ausgerüstet für die nächste Überwachungsperiode.

Figuren 34-39 zeigen Beispiele von Trageinrichtungen, die jeweils mit einer Dosimetervorrichtung 2 versehen sind, und zwar ein Stirnband (Fig. 34), eine Haube (Fig. 35), eine Maske (Fig. 36), eine Brille (Fig. 37), ein Visier (Fig. 38) und ein Fingerring (Fig. 39).

Soweit nicht schon erläutert, haben die hier beschriebenen Dosimetervorrichtungen folgende Vorteile:
Der Materialverbrauch zum Bereitstellen der Trägerteile ist reduziert. Die Messposition am Körperteil des Benutzers ist definiert, so dass eine Rückverfolgbarkeit bei Verdacht auf erhöhte Dosiswerte gewährleistet ist. Das Tragen der Dosimetervorrichtung wirkt für den Anwender nicht störend. Einfaches und sicheres Anbringen des Messelements sowie ein einfacher Austausch sind möglich.

## Patentansprüche

1. Anordnung mit einer Brille als Trageinrichtung (1) zum Tragen auf dem Kopf eines Benutzers und mit einer Dosimetervorrichtung umfassend ein Trägerteil (10, 40, 40', 50, 70, 90, 130), welches eine geschlossene Ummantelung (11, 41, 41', 51, 71) aus fest miteinander verbundenen Wandungen umfasst, die ein Messelement (8) zum Erfassen von ionisierender Strahlung umschliessen, wobei die Anordnung Befestigungsmittel (5, 5', 12, 20, 20', 30, 42, 52, 60, 72, 80, 100, 110, 120, 136, 137) zur lösbaren Befestigung des Trägerteils an der Brille aufweist, wobei die Befestigungsmittel eingerichtet sind, den Ort der Befestigung des Trägerteils an der Innenseite der Brille an einer Seitenblende festzulegen.

2. Anordnung nach Anspruch 1, wobei die Befestigungsmittel (5, 5', 12, 20, 20', 30, 42, 52, 60, 72, 80, 100, 110, 120, 136, 137) eingerichtet sind zur Bildung einer Schnapp-, Bajonett- und/oder Schraubverbindung.

3. Anordnung nach einem der vorangehenden Ansprüche, bei welcher das Trägerteil (10, 40, 40', 50, 70, 90, 130) eine spritzwasserdichte Verpackung bildet.

4. Anordnung nach einem der vorangehenden Ansprüche, bei welcher die Ummantelung (11, 41, 41', 51, 71) in der Draufsicht gesehen im Wesentlichen kreisförmig ausgebildet ist, vorzugsweise ist der maximale Durchmesser der Ummantelung kleiner als 25 mm und besonders bevorzugt kleiner als 20 mm.

5. Anordnung nach einem der vorangehenden Ansprüche, wobei die Befestigungsmittel mindestens ein Randelement (12, 42, 52) umfassen, welches am Trägerteil (10, 40, 40') gebildet und elastisch ausgestaltet ist zur Bildung einer Schnappverbindung.

6. Anordnung nach Anspruch 5, wobei das Trägerteil (40, 40') durch Verschieben entlang einer Verschiebeachse (A) an der Trageinrichtung (1) befestigbar ist und das Trägerteil mehrere Randelemente (42) aufweist, die um die Verschiebeachse (A) herum angeordnet und radial zu dieser bewegbar sind.

7. Anordnung nach einem der vorangehenden Ansprüche, wobei die Befestigungsmittel ein an der Trageinrichtung (1) anbringbares oder angebrachtes Gegenstück (20, 20', 60) aufweisen, welches zur Bildung einer Druckknopfverbindung mit dem Trägerteil (10, 50) ausgestaltet ist.

8. Anordnung nach einem der vorangehenden Ansprüche, wobei die Befestigungsmittel ein an der Trageinrichtung (1) gebildetes Loch (5, 5') umfassen, in welches ein Ende (42, 52) des Trägerteils (40, 40', 50) einfügbar ist.

9. Anordnung nach einem der vorangehenden Ansprüche, wobei die Befestigungsmittel ein Gegenstück (100, 110, 120) umfassen, welches an der Trageinrichtung (1) anbringbar oder angebracht ist, vorzugsweise ist zumindest ein Teil des Gegenstücks als integralen Bestandteil der Trageinrichtung (1) ausgebildet, und einen Einschub (105) aufweist, in welchen das Trägerteil (90) einschiebbar ist.

10. Anordnung nach Anspruch 9, wobei das Gegenstück (100, 110, 120) spreizbare Arme (103, 104, 123, 124) aufweist zum Umgreifen des Trägerteils (90).

11. Anordnung nach Anspruch 9 oder 10, wobei das Trägerteil (90) durch Verschieben in einer Einschieberichtung (E) in den Einschub (105) einfügbar und aus diesem entnehmbar ist, wobei das Gegenstück (100, 110, 120) Anschläge (103a, 104a, 123a, 124a) aufweist zum Festhalten des Trägerteils (90) quer zur Einschieberichtung.

12. Anordnung nach einem der vorangehenden Ansprüche, wobei das Trägerteil (10, 40, 40', 50, 70, 90, 130) und/oder die Befestigungsmittel (5, 5', 12, 20, 20', 30, 42, 52, 60, 72, 80, 100, 110, 120, 136, 137) aus metallfreiem Material, insbesondere Kunststoff, gefertigt sind.

13. Anordnung nach einem der Ansprüche 9 bis 12, wobei das Gegenstück ein Befestigungsteil (110), welches an der Trageinrichtung (1) anbringbar oder angebracht ist, vorzugsweise als integraler Bestandteil der Trageinrichtung (1), und ein Adapterteil (120) umfasst, das den Einschub aufweist und lösbar mit dem Befestigungsteil verbindbar ist, vorzugsweise mittels einer Bajonettverbindung.

14. Anordnung nach einem der vorangehenden Ansprüche, wobei das Trägerteil (130) herausragende Arme (136, 137) aufweist zur Bildung eines Bajonettverschlusses mit einem an der Trageinrichtung (1) anbringbaren oder angebrachten Gegenstück (110), vorzugsweise sind die Arme an der Ummantelung des Trägerteils angebracht, welche in der Draufsicht gesehen im Wesentlichen kreisförmig ist.

15. Verfahren zum Erfassen von ionisierender Strahlung, bei welchem eine Anordnung nach einem der Ansprüche 1 bis 14 eingesetzt wird, wobei nach der Verwendung der Dosimetervorrichtung das Messelement (8) aus dem Trägerteil (10, 40, 40', 50, 70, 90, 130) entfernt, ausgewertet und in einem neuen Trägerteil eingeschlossen wird, welches vorzugsweise spritzwasserdicht ist.

## Claims

1. Arrangement with eyeglasses as a carrying device (1) for carrying on the head of a user and with a dosimeter device comprising a carrier part (10, 40, 40', 50, 70, 90, 130), which includes a closed casing (11, 41, 41', 51, 71) formed of fixedly interconnected walls, which enclose a measuring element (8) for detecting ionizing radiation, wherein the arrangement comprises fastening means (5, 5', 12, 20, 20', 30, 42, 52, 60, 72, 80, 100, 110, 120, 136, 137) for the detachable fastening of the carrier part to the eyeglasses, wherein the fastening means are configured for defining the location of the fastening of the carrier part on the inside of the eyeglasses on a lateral shield.

2. Arrangement according to claim 1, wherein the fastening means (5, 5', 12, 20, 20', 30, 42, 52, 60, 72, 80, 100, 110, 120, 136, 137) are configured for forming a snap-in connection, a bayonet connection and/or a threaded connection.

3. Arrangement according to one of the preceding claims, in which the carrier part (10, 40, 40', 50, 70, 90, 130) forms a packaging, which is impervious to splashed water.

4. Arrangement according to one of the preceding claims, in which the casing (11, 41, 41', 51, 71) is designed in a substantially circular form as seen in a top view, preferably the maximum diameter of the casing is less than 25 mm and particularly preferably less than 20 mm.

5. Arrangement according to one of the preceding claims, wherein the fastening means include at least one edge element (12, 42, 52) which is formed on the carrier part (10, 40, 40') and is designed to be elastic for forming a snap-in connection.

6. Arrangement according claim 5, wherein the carrier part (40, 40') can be fastened on the carrying device (1) via displacement along a displacement axis (A), and the carrier part comprises multiple edge elements (42), which are arranged about the displacement axis (A) and are movable radially thereto.

7. Arrangement according to one of the preceding claims, wherein the fastening means comprise a mating part (20, 20', 60) which can be mounted on or is mounted on the carrying device (1), which mating part is designed for forming a pushbutton connection with the carrier part (10, 50).

8. Arrangement according to one of the preceding claims, wherein the fastening means comprise a hole (5, 5') formed in the carrying device (1), into which an end (42, 52) of the carrier part (40, 40', 50) can be inserted.

9. Arrangement according to one of the preceding claims, wherein the fastening means include a mating part (100, 110, 120) which can be mounted on or is mounted on the carrying device (1), preferably at least one portion of the mating part is designed as an integral component of the carrying device (1), and which comprises a receptacle (105), into which the carrier part (90) can be inserted.

10. Arrangement according to claim 9, wherein the mating part (100, 110, 120) comprises arms (103, 104, 123, 124), which can be spread apart for encompassing the carrier part (90) .

11. Arrangement according to claim 9 or 10, wherein the carrier part (90) can be inserted into the receptacle (105) via displacement in an insertion direction (E) and can be removed therefrom, wherein the mating part (100, 110, 120) comprises stops (103a, 104a, 123a, 124a) for holding the carrier part (90) transversely to the insertion direction.

12. Arrangement according to one of the preceding claims, wherein the carrier part (10, 40, 40', 50, 70, 90, 130) and/or the fastening means (5, 5', 12, 20, 20', 30, 42, 52, 60, 72, 80, 100, 110, 120, 136, 137) are produced from metal-free material, in particular plastic.

13. Arrangement according to one of claims 9 to 12, wherein the mating part includes a fastening part (110), which can be mounted on or is mounted on the carrying device (1), preferably as an integral component of the carrying device (1), and an adapter part (120) which has the receptacle and is detachably connectable to the fastening part, preferably by means of a bayonet connection.

14. Arrangement according to one of the preceding claims, wherein the carrier part (130) comprises protruding arms (136, 137) for forming a bayonet connection with a mating part (110), which can be mounted on or is mounted on the carrying device (1), preferably the arms are mounted on the casing of the carrier part, which casing is substantially circular as seen in a top view.

15. Method for detecting ionizing radiation, in which an arrangement according to one of claims 1 to 14 is used, wherein, after the use of the dosimeter device, the measuring element (8) is removed from the carrier part (10, 40, 40', 50, 70, 90, 130), is evaluated, and is enclosed in a new carrier part, which is preferably impervious to splashed water.

## Revendications

1. Agencement comprenant des lunettes en tant que dispositif de portage (1) destiné à être porté sur la tête d'un utilisateur et un dispositif dosimètre comprenant une partie de support (10, 40, 40', 50, 70, 90, 130) avec une enceinte close (11, 41, 41', 51, 71) constituée de parois rigidement reliées entre elles lesquelles enferment un élément de mesure (8) destiné à détecter un rayonnement ionisant, où l'agencement comprend des moyens de fixation (5, 5', 12, 20, 20', 30, 42, 52, 60, 72, 80, 100, 110, 120, 136, 137) pour la fixation détachable de la partie de support sur les lunettes, lesdits moyens de fixation étant agencés de manière à déterminer l'endroit de la fixation de la partie de support sur un écran latéral du côté intérieur des lunettes.

2. Agencement selon la revendication 1, où les moyens de fixation (5, 5', 12, 20, 20', 30, 42, 52, 60, 72, 80, 100, 110, 120, 136, 137) sont agencés de manière à former une liaison par encliquetage, à baïonnette et/ou vissée.

3. Agencement selon l'une des revendications précédentes, où la partie de support (10, 40, 40', 50, 70, 90, 130) forme un emballage étanche aux projections d'eau.

4. Agencement selon l'une des revendications précédentes, où l'enceinte (11, 41, 41', 51, 71) présente en vue de dessus une forme substantiellement circulaire, le diamètre maximum de l'enceinte étant préférablement inférieur à 25 mm et particulièrement préférablement inférieur à 20 mm.

5. Agencement selon l'une des revendications précédentes, où les moyens de fixation comprennent au moins un élément rebord (12, 42, 52) qui est formé sur la partie de support (10, 40, 40') et est formé de manière élastique afin de former une liaison par encliquetage.

6. Agencement selon la revendication 5, où la partie de support (40, 40') peut être fixée au dispositif de portage en la déplaçant le long d'un axe de déplacement (A) et la partie de support comprend plusieurs éléments rebord (42) qui sont agencés autour de l'axe de déplacement (A) et déplaçables en direction radiale par rapport à ce dernier.

7. Agencement selon l'une des revendications précédentes, où les moyens de fixation comprennent une contrepartie (20, 20', 60) fixée ou pouvant être fixée au dispositif de portage (1), laquelle est conçue de manière à former une liaison par bouton-pression avec la partie de support (10, 50) .

8. Agencement selon l'une des revendications précédentes, où les moyens de fixation comprennent un trou (5, 5') formé dans le dispositif de portage (1), dans lequel une extrémité (42, 52) de la partie de support (40, 40', 50) est insérable.

9. Agencement selon l'une des revendications précédentes, où les moyens de fixation comprennent une contrepartie (100, 110, 120) fixée ou pouvant être fixée au dispositif de portage (1), au moins une partie de ladite contrepartie formant préférablement une partie intégrale du dispositif de portage (1), et comprenant un logement (105) dans lequel la partie de support (90) est insérable.

10. Agencement selon la revendication 9, où la contrepartie (100, 110, 120) présente des bras (103, 104, 123, 124) écartables destinés à enserrer la partie de support (90).

11. Agencement selon la revendication 9 ou 10, où la partie de support (90) est insérable dans le logement (105) et enlevable de celui-ci en la déplaçant dans une direction d'insertion (E), la contrepartie (100, 110, 120) ayant des butées (103a, 104a, 123a, 124a) destinées à retenir la partie de support (90) transversalement à la direction d'insertion.

12. Agencement selon l'une des revendications précédentes, où la partie de support (10, 40, 40', 50, 70, 90, 130) et/ou les moyens de fixation (5, 5', 12, 20, 20', 30, 42, 52, 60, 72, 80, 100, 110, 120, 136, 137) sont fabriqués à partir d'un matériau sans métal, plus particulièrement d'un matériau synthétique.

13. Agencement selon l'une des revendications 9 à 12, où la contrepartie comprend un élément de fixation (110) fixé ou pouvant être fixé au dispositif de portage (1), préférablement en tant que partie intégrale du dispositif de portage (1), ainsi qu'un élément adaptateur (120) qui présente le logement et peut être relié de manière détachable à l'élément de fixation, préférablement au moyen d'une liaison à baïonnette.

14. Agencement selon l'une des revendications précédentes, où la partie de support (130) présente des bras (136, 137) en saillie afin de former une fermeture à baïonnette avec une contrepartie (110) fixée ou pouvant être fixée au dispositif de portage (1), les bras étant préférablement attachés à l'enceinte de la partie de support qui présente en vue de dessus une forme substantiellement circulaire.

15. Procédé de détection du rayonnement ionisant mettant en oeuvre un agencement selon l'une des revendications 1 à 14, où après l'utilisation du dispositif dosimètre, l'élément de mesure (8) est enlevé de la partie de support (10, 40, 40', 50, 70, 90, 130), évalué et enfermé dans un nouvel élément de support qui est préférablement étanche aux projections d'eau.
